# EUROPÄISCHE PATENTSCHRIFT

(11) **EP 1 712 497 B1**
(45) Veröffentlichungstag und Bekanntmachung des Hinweises auf die Patenterteilung: **16.07.2008**
(21) Anmeldenummer: 05007926.8
(22) Anmeldetag: 12.04.2005
(51) Int. Cl.: B65G 53/66

(54) **Anlage zum pneumatischen Fördern von staubförmigem und/oder feinkörnigem Fördergut**
System for pneumatically conveying pulverized or fine grained bulk material
Système de transport pneumatique pour des produits en vrac pulvérisés ou à grains fins

(43) Veröffentlichungstag der Anmeldung: 18.10.2006
(73) Patentinhaber: Förder- und Anlagentechnik GmbH, 57572 Niederfischbach (DE)
(72) Erfinder: Becker, Norbert, 57258 Freudenberg (DE)
(74) Vertreter: Grosse, Wolf-Dietrich Rüdiger

(56) Entgegenhaltungen:
- DE-A1- 3 042 201
- GB-A- 1 360 424

## Beschreibung

Anlage zum pneumatischen Fördern von staubförmigem und/oder feinkörnigem Fördergut

Die Erfindung betrifft eine Anlage zum pneumatischen Fördern von staubförmigem und/oder feinkörnigem Fördergut mit einem Förderbehälter mit Materialzulauf, einer Förderleitung, einer Fördergaszufuhr, einer Zusatzgaszufuhr sowie einer Regelung für das Fördergas.

Derartige Anlagen zum pneumatischen Fördern von staubförmigem Fördergut, seien es nun feine oder grobe oder auch gemischte Stäube bzw. feinkörniges Schüttgut, sind bekannt. Hier wird das staubförmige Fördergut durch ein Fördergas fluidisiert und in diesen Zustand mit dem Fördergas durch die Förderleitung transportiert. Es ist auch schon eine Regelung bzw. Steuerung zum Beeinflussen des pneumatischen Förderers bekannt. Die Regelung für das Fördergas erfolgt durch einen Druckaufnehmer in der Förderleitung, dessen elektrische Signale für die Beeinflussung der auf die Länge der Förderleitung an verschiedenen Stellen zugeführten Zusatzgases, eventuell die Materialzufuhr sowie die Fördergaszufuhr herangezogen werden. Beginnt sich nämlich eine Förderleitung mit Staub zuzusetzen, so erhöht sich der Druck in der Förderleitung. Die elektrischen Drucksignale werden dann zur Steuerung der Fördergaszufuhr sowie der Zusatzgaszufuhr und ggf. der Materialzufuhr verwendet. Droht die Förderleitung zu verstopfen, so wird die Fördergaszufuhr herunter geregelt, so dass weniger Material nachgefördert wird. Dafür wird die Zusatzgaszufuhr erhöht, damit eine größere Luftströmung erzeugt wird, die der Verstopfung entgegenwirkt.

Diese Regelvorrichtung ist nicht nur wegen des Druckaufnehmers und der langen Signalleitung zur Übermittlung der Drucksignale aufwendig. Auch die Regeleinheit und ggf. das Programm für die Regeleinheit sind teuer und die ganze Anlage ist anfällig.

Die GB 1 360 424 A offenbart bereits eine Anlage zum pneumatischen Fördern von staubförmigen Fördergut, bei der unter Zuhilfenahme einer großen Anzahl teilweise handbetätigter Ventile Staub fluidisiert und gefördert werden soll, wobei der fluidisierte Staub für Rückkopplungen aufwendig und störanfällig gefiltert werden muss. Die Anlage ist aufwendig und zudem kostenintensiv zu betreiben. Eine automatische Förderung des Staubes ist nicht möglich.

Der Erfindung liegt daher die Aufgabe zugrunde, eine Anlage zum pneumatischen Fördern von staubförmigem und/oder feinkörnigem Fördergut so weiterzubilden, dass sie ohne aufwendige Drucksensoren und Signalleitungen sowie elektronische Regelungen auskommt, automatisch arbeitet, leicht, auch von ungelerntem Personal zu bedienen ist, und kostengünstig zu Erstellen und Betreiben ist.

Zur Lösung der Aufgabe werden die Merkmale des Anspruchs 1 vorgeschlagen. Dadurch, dass die Regelung im Bereich der Druckerfassung erfolgt sind anfällige Signalleitungen überflüssig. Durch die mechanische Regelung kommt die Anlage zum pneumatischen Fördern von staubförmigem Fördergut ohne aufwändige elektronische Regelungen aus, und kann dennoch automatisch betrieben werden. Durch die Verwendung nur eines Ventils ist die Anlage kostengünstig zu erstellen und auch kostengünstig zu betreiben.

Steigt der Druck am Anschluss für das Fördergas, z.B. einer Förderluft über ein dem Ventil vorgegebenen Druck hinaus, so wird die Druckluftzufuhr am Anschluss für die Förderluft automatisch reduziert und am Anschluss für die Zusatzluft erhöht. Steigt der Druck am Anschluss für die Förderluft weiter, so wird letztendlich die Druckluftzufurh vom Anschluss für die Förderluft auf den Anschluss für die Zusatzluft umgeleitet, so dass kein weiteres Material mehr gefördert wird und über die Zusatzluft die Leitungen freigeblasen werden können.

Dazu hat sich bewährt, dass der Anschluss für die Zusatzluft direkt mit der Förderleitung in Verbindung steht. Die Zusatzluft kann an mehreren Stellen in die Förderleitung eingespeist werden.

Nachahmenswert ist, dass das Ventil eine Einrichtung zur Einstellung des maximalen Förderdrucks aufweist. Auch diese Einstellung erfolgt mechanisch. Wird der maximal eingestellte Förderdruck überstiegen, wird die Druckluftzufuhr nicht mehr über den Anschluss für die Förderluft in den Förderbehälter sondern über den Anschluss für die Zusatzluft direkt in die Förderleitung geblasen. Dieser Übergang kann, wie oben ausgeführt, fließend sein.

Das Ventil ist so aufgebaut, dass bis zum Erreichen des maximalen Förderdrucks die Druckluftzufuhr mit dem Anschluss für die Förderluft verbunden ist und dass beim Übersteigen des eingestellten maximalen Förderdrucks die Druckluftzufuhr, ggf. fließend, mit dem Anschluss für die Zusatzluft verbunden wird.

Es besteht auch die Möglichkeit, die Zusatzgaszufuhr direkt im Bereich des Anschlusses der Zusatzgaszufuhr an der Förderleitung mechanisch zu regeln. Dazu ist ein Zusatzgasventil vorgesehen, das einen Anschluss für das Zusatzgas aufweist. Weiterhin besitzt es einen Anschluss für eine Messleitung und einen Anschluss für die Zusatzgasabfuhr. Die Messleitung weist vorzugsweise gegenüber der Leitung für die Zusatzgasabfuhr einen kleinen Querschnitt auf. Sowohl der Anschluss für die Messleitung als auch der Anschluss für die Zusatzgasabfuhr sind direkt mit der Förderleitung verbunden. Das Zusatzgasventil verteilt in Abhängigkeit vom Druck in der Förderleitung, ermittelt am Anschluss der Messleitung, die Zusatzgaszufuhr zum Anschluss für die Messleitung und zum Anschluss für die Zusatzgasabfuhr. Damit wird erreicht, dass dann, wenn der Druck in der Messleitung über einen vorgegebenen Wert steigt, das Zusatzgas direkt über die Zusatzgasabfuhr in die Förderleitung geblasen werden kann. Auch hier kann der Übergang fließend sein.

Von Vorteil ist dabei, dass das Zusatzgasventil eine Einrichtung zur Einstellung des maximalen Förderdrucks aufweist und dass bis zum Erreichen des maximalen Förderdrucks die Zusatzgaszufuhr mit dem Anschluss der Messleitung verbunden ist und dass beim Überschreiten des maximalen Förderdrucks die Zusatzgaszufuhr mit dem Anschluss für die Zusatzgasabfuhr verbunden ist. Auch dieses Zusatzgasventil gewährleistet, dass keine elektrischen Druckaufnehmer und elektrischen Steuerungen notwendig sind, um die Förderleitung ggf. freiblasen zu können.

Es hat sich bewährt, dass die Ventile eine Membran aufweisen, die einerseits durch eine Feder und andererseits durch den an dem Anschluss für die Förderluft bzw. durch den an dem Messanschluss herrschenden Druck der Förderleitung beaufschlagt ist, und dass die Druckmembran mit einem doppelt wirkenden Ventilschaft verbunden ist.

Übersteigt der Druck am Anschluss für die Förderluft bzw. am Messanschluss die Kraft der Feder, so bewegt sich die Membran. Mit dieser Membran bewegt sich ein Ventilschaft, der den Weg von der Druckluftzufuhr zum Anschluss für die Förderluft bzw. zur Messleitung absperrt und dafür den Weg zum Anschluss für die Zusatzluft bzw. zum Anschluss für die Zusatzabluft freigibt.

Von Vorteil ist, dass die Feder in ihrer Federkraft mechanisch einstellbar ist. Hier kann durch ein einfaches ggf. skaliertes Wählrad die Federkraft und damit der maximale Druck eingestellt werden, bei dem eine, ggf. schleichende, Umschaltung von dem Einblasen in den Förderbehälter zum direkten Einblasen und Reinigen der Förderleitung erfolgt.

### Die Erfindung wird anhand einer Zeichnung näher erläutert. Dabei zeigt:

- Figur 1: eine erfindungsgemäße Anlage zum Fördern von staubförmigem und/oder feinkörnigem Fördergut,
- Figur 2: eine Anbindung eines Zusatzgasventils an die Förderleitung,
- Figur 3: ein erfindungsgemäßes Ventil, bei dem die Druckluftzufuhr über das Ventil zum Anschluss für die Förderluft erfolgt und
- Figur 4: ein erfindungsgemäßes Ventil, bei dem die Druckluftzufuhr über das Ventil zum Anschluss für die Zusatzluft erfolgt.

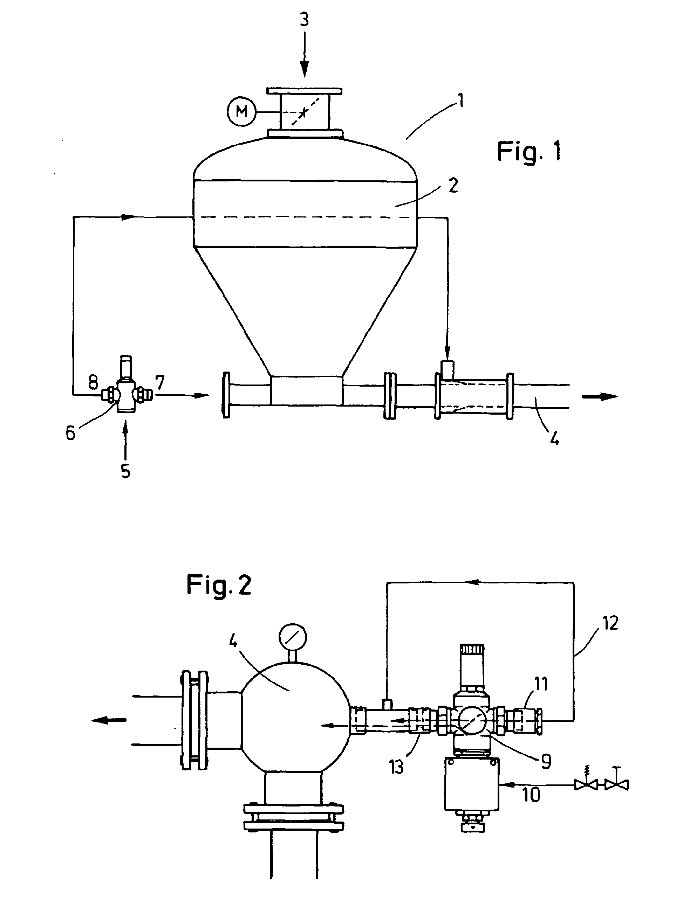

Figur 1 zeigt eine Anlage 1 zum pneumatischen Fördern von staubförmigem und/oder feinkörnigem Fördergut mit einem Förderbehälter 2. Der Förderbehälter 2 weist einen Materialzulauf 3 auf. Am Förderbehälter 2 ist eine Förderleitung 4 angeschlossen. Eine Fördergaszufuhr 5 erfolgt zu einem Ventil 6. Das Ventil 6 weist einen Anschluss 7 für das Fördergas sowie wie einen Anschluss 8 für eine Zusatzgaszufuhr auf. Der Anschluss 8 für die Zusatzgaszufuhr ist direkt mit der Förderleitung 4 verbunden.

Figur 2 zeigt die Förderleitung 4, an die ein Zusatzgasventil 9 angeschlossen ist. Dem Zusatzgasventil 9 wird über den Anschluss 10 Zusatzgas aufgeschaltet. Am Anschluss 11 ist eine Messleitung 12 angeschlossen, die direkt mit der Förderleitung 4 in Verbindung steht. Der Anschluss 13 für die Fördergasabfuhr ist ebenfalls direkt mit der Förderleitung 4 verbunden.

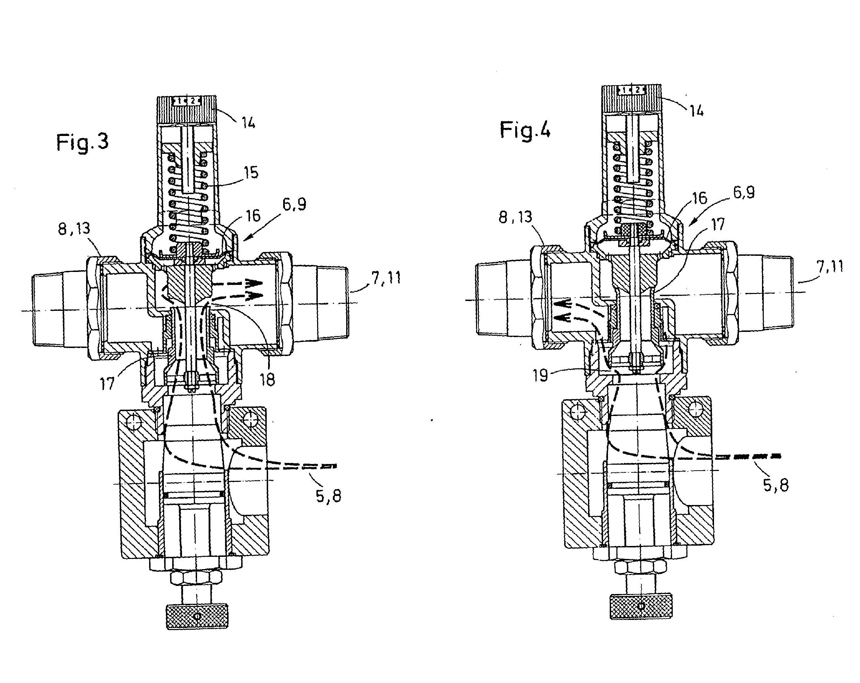

Figur 3 zeigt ein erfindungsgemäßes Ventil 6 bzw. 9. Es weist eine Fördergaszufuhr 5 bzw. Zusatzgaszufuhr 8 auf. Das Ventil 6, 9 besitzt weiterhin einen Anschluss 7, 11 für das Fördergas bzw. für die Messleitung 12. Zudem weist das Ventil 6, 9 einen Anschluss 8, 13 für das Zusatzgas bzw. die Zusatzgasabfuhr auf. Über eine Einstellvorrichtung 14 lässt sich der maximale Förderdruck einstellen. Die Einstellvorrichtung 14 arbeitet über eine Feder 15 auf eine Membran 16. Auf die der Feder entgegengesetzten Seite der Membran 16 wirkt der am Anschluss 7, 11 anstehende Druck aus der Förderleitung 4 bzw. Messleitung 12. Ist dieser Druck kleiner als der eingestellte Federdruck, so wird Druckgas vom Anschluss 5, 8 über das Ventil 6, 9 zum Anschluss 7, 11 geleitet. Sowie der Druck am Anschluss 7, 11 größer wird als die eingestellte Federkraft, verschiebt sich die Membran 16 nach oben, wie dies Figur 4 zeigt.

Wie Figur 4 zu entnehmen ist, ist an der Membran 16 ein Ventilschaft 17 angeordnet. Dieser Ventilschaft 17 schließt durch seine Bewegung einerseits die in Figur 3 dargestellte Öffnung 18 und öffnet andererseits die in Figur 4 dargestellte Öffnung 19. Damit kann Druckluft vom Anschluss 5, 8 zum Anschluss 8, 13 gelangen. Das mit einem konstanten Druck am Anschluss 5, 8 anstehende Druckgas wird vom Anschluss 8, 13 direkt in die Förderleitung 4 geblasen.

Bezugszeichenübersicht
1. Anlage
2. Förderbehälter
3. Materialzulauf
4. Förderleitung
5. Fördergaszufuhr
6. Ventil
7. Anschluss für Fördergas
8. Anschluss Zusatzgas
9. Zusatzgasventil
10. Anschluss Zusatzgaszufuhr
11.Anschluss Messleitung
12. Messleitung
13. Anschluss Zusatzgasabfuhr
14. Einstellvorrichtung
15. Feder
16. Membran
17. Ventilschaft
18. Öffnung
19. Öffnung

## Patentansprüche

1. Anlage (1) zum pneumatischen Fördern von staubförmigem und/oder feinkörnigem Fördergut mit einem Förderbehälter (2) mit Materialzulauf (3), einer Förderleitung (4), einer Fördergaszufuhr (5), einer Zusatzgaszufuhr sowie einer Regelung für das Fördergas,
**dadurch gekennzeichnet,**
**dass** die Regelung der Fördergasmenge und/oder der Zusatzgaszufuhrmenge im Bereich der Druckerfassung mechanisch erfolgt, und dass für die Regelung der Fördergasmenge ein Ventil (6) vorgesehen ist, dass das Ventil (6) mindestens einen Anschluss für die Fördergaszufuhr (5), mindestens einen Anschluss (7) zur Abgabe des Fördergases sowie mindestens einen Anschluss (8) für das Zusatzgas aufweist, dass der Anschluss (7) über den Förderbehälter (2) mit der Förderleitung (4) in Verbindung steht und dass das Ventil (6) in Abhängigkeit vom Druck am Anschluss (7) für das Fördergas die Fördergaszufuhr zwischen dem Anschluss (7) für das Fördergas und dem Anschluss (8) für das Zusatzgas verteilt.

2. Anlage nach Anspruch 1.
**dadurch gekennzeichnet,**
**dass** der Anschluss (8) für das Zusatzgas direkt mit der Förderleitung (4) in Verbindung steht.

3. Anlage nach Anspruch 1 oder 2,
**dadurch gekennzeichnet,**
**dass** das Ventil (6) eine Vorrichtung (14) zur Einstellung des maximalen Förderdrucks aufweist.

4. Anlage nach Anspruch 3,
**dadurch gekennzeichnet,**
**dass** bis zum Erreichen des maximalen Förderdrucks die Druckgaszufuhr mit dem Anschluss (7) für das Fördergas verbunden ist und dass beim Überschreiten des maximalen Förderdrucks die Druckgaszufuhr mit dem Anschluss (8) für das Zusatzgasverbunden ist.

5. Anlage nach Anspruch 1,
**dadurch gekennzeichnet,**
**dass** für die Regelung der Zusatzgaszufuhr ein Zusatzgasventil (9) vorgesehen ist, dass das Zusatzgasventil (9) einen Anschluss (10) für das Zusatzgas, einen Anschluss (11) für eine Messleitung (12) und einen Anschluss (13) für die Zusatzgasabfuhr aufweist, dass der Anschluss (13) für die Messleitung (12) und der Anschluss (13) für die Zusatzgasabfuhr direkt mit der Fördedeitung (4) verbunden sind und dass das Zusatzgasventil (9) in Abhängigkeit vom Druck in der Förderleitung (4) das Zusatzgas auf den Anschluss (11) für die Messleitung (12) und den Anschluss (13) für die Zusatzgasabfuhr verteilt.

6. Anlagen nach Anspruch 5,
**dadurch gekennzeichnet,**
**dass** der Querschnitt der Messleitung gegenüber dem Querschnitt der Leitung für die Zusatzgasabfuhr klein ist.

7. Anlagen nach Anspruch 5 oder 6,
**dadurch gekennzeichnet,**
**dass** das Ventil (9) eine Vorrichtung (14) zur Einstellung des maximalen Förderdrucks aufweist.

8. Anlage nach Anspruch 7,
**dadurch gekennzeichnet,**
**dass** bis zum Erreichen des maximalen Förderdrucks die Druckgaszufuhr mit dem Anschluss (11) für die Messleitung (12) verbunden ist und dass beim Überschreiten des maximalen Förderdrucks die Zusatzgaszufuhr mit dem Anschluss (13) für die Zusatzgasabfuhr verbunden ist.

9. Anlage nach einem der Ansprüche 1 bis 8,
**dadurch gekennzeichnet, dass** die Ventile (6, 9) eine Membran (16) aufweisen, die einerseits durch eine Feder (15) und andererseits durch den am Anschluss (7, 11) für das Fördergas bzw. am Anschluss der Messleitung (12) herrschenden Druck der Förderleitung (4) beaufschlagt ist und dass die Membran (16) mit einem doppelt wirkenden Ventilschaft (17) verbunden ist.

10. Anlage nach Anspruch 9,
**dadurch gekennzeichnet,**
**dass** die Feder (15) in ihrer Federkraft einstellbar ist.

## Claims

1. A system (1) for pneumatically conveying pulverulent and/or fine-grained conveyed media with a conveying container (2) with a material feed (3), a conveying line (4), a conveying gas supply (5), an additional gas supply and a regulator for the conveying gas,
**characterised**
**in that** the quantity of conveying gas and/or the quantity of additional supplied gas is regulated mechanically in the pressure detection region, and that a valve (6) is provided for regulating the quantity of conveying gas, that the valve (6) has at least one connection for the conveying gas supply (5), at least one connection (7) for outputting the conveying gas and at least one connection (8) for the additional gas, that the connection (7) is connected via the conveying container (2) to the conveying line (4), and that the valve (6) distributes the conveying gas supply between the connection (7) for the conveying gas and the connection (8) for the additional gas as a function of the pressure at the connection (7) for the conveying gas.

2. The system according to Claim 1,
**characterised**
**in that** the connection (8) for the additional gas is directly connected to the conveying line (4).

3. The system according to Claim 1 or 2,
**characterised**
**in that** the valve (6) has a device (14) for setting the maximum conveying pressure.

4. The system according to Claim 3,
**characterised**
**in that** the compressed gas supply is connected to the connection (7) for the conveying gas until the maximum conveying pressure is reached and that the compressed gas supply is connected to the connection (8) for the additional gas when the maximum conveying pressure is exceeded.

5. The system according to Claim 1,
**characterised**
**in that** an additional gas valve (9) is provided for regulating the additional gas supply, that the additional gas valve (9) has a connection (10) for the additional gas, a connection (11) for a measurement line (12) and a connection (13) for the additional gas outlet, that the connection (11) for the measurement line (12) and the connection (13) for the additional gas outlet are connected directly to the conveying line (4), and that the additional gas valve (9) distributes the additional gas to the connection (11) for the measurement line (12) and the connection (13) for the additional gas outlet as a function of the pressure in the conveying line (4).

6. The systems according to Claim 5,
**characterised**
**in that** the cross section of the measurement line is small compared to the cross section of the line for the additional gas supply.

7. The systems according to Claim 5 or 6,
**characterised**
**in that** the valve (9) has a device (14) for setting the maximum conveying pressure.

8. The system according to Claim 7,
**characterised**
**in that** the compressed gas supply is connected to the connection (11) for the measurement line (12) until the maximum conveying pressure is reached and that the additional gas supply is connected to the connection (13) for the additional gas outlet when the maximum conveying pressure is exceeded.

9. The system according to one of Claims 1 to 8,
**characterised in that** the valves (6, 9) have a membrane (16) which is acted upon on one side by a spring (15) and on the other side by the pressure of the conveying line (4) prevailing at the connection (7, 11) for the conveying gas or at the connection of the measurement line (12) and that the membrane (16) is connected to a doubly effective valve shaft (17).

10. The system according to Claim 9,
**characterised**
**in that** the spring force of the spring (15) is adjustable.

## Revendications

1. Installation (1) de transport pneumatique d'une matière transportée sous forme de poussière et/ou de grains fins, comportant un contenant de transport (2) avec un flux entrant de matériau (3), une conduite de transport (4), une admission de gaz de transport (5), une admission de gaz d'appoint ainsi qu'une unité de régulation du gaz de transport,
**caractérisée en ce que**
la régulation de la quantité de gaz de transport et/ou de la quantité d'admission de gaz d'appoint s'effectue mécaniquement au niveau de la détection de pression et **en ce que** une soupape (6) est prévue en vue de la régulation de la quantité de gaz de transport, **en ce que** la soupape (6) présente au moins un raccord pour l'admission de gaz de transport (5), au moins un raccord (7) pour délivrer le gaz de transport ainsi que au moins un raccord (8) destiné au gaz d'appoint, **en ce que** le raccord (7) est en liaison avec la conduite de transport (4) par l'intermédiaire du contenant de transport (2) et **en ce que** la soupape (6) répartit, en fonction de la pression au niveau du raccord (7) du gaz de transport, le gaz de transport admis entre le raccord (7) du gaz de transport et le raccord (8)du gaz d'appoint.

2. Installation selon la revendication 1,
**caractérisée en ce que**
le raccord (8) du gaz d'appoint est en liaison directe avec la conduite de transport (4).

3. Installation selon la revendication 1 ou 2,
**caractérisée en ce que**
la soupape (6) présente un dispositif (14) pour régler la pression de transport maximale.

4. Installation selon la revendication 3,
**caractérisée en ce que**
jusqu'à ce que la pression de transport maximale soit atteinte, l'admission de gaz pressurisé est reliée au raccord (7) du gaz de transport et **en ce que**, lorsque la pression de transport maximale est dépassée, l'admission de gaz pressurisé est reliée au raccord (8) du gaz d'appoint.

5. Installation selon la revendication 1,
**caractérisée en ce que**
en vue de la régulation de l'admission de gaz d'appoint, une soupape de gaz d'appoint (9) est prévue, **en ce que** la soupape de gaz d'appoint (9) présente un raccord (10) pour le gaz d'appoint, un raccord (11) d'une ligne de mesure (12) et un raccord (13) pour l'évacuation du gaz d'appoint, **en ce que** le raccord (13) de la ligne de mesure (12) et le raccord (13) de l'évacuation de gaz d'appoint sont directement reliés à la conduite de transport (4) et **en ce que** la soupape de gaz d'appoint (9) répartit, en fonction de la pression dans la conduite de transport (4), le gaz d'appoint sur le raccord (11) de la ligne de mesure (12) et le raccord (13) de l'évacuation de gaz d'appoint.

6. Installation selon la revendication 5,
**caractérisée en ce que**
la section transversale de la ligne de mesure est plus petite que la section transversale de la conduite prévue pour l'évacuation du gaz d'appoint.

7. Installation selon la revendication 5 ou 6,
**caractérisée en ce que**
la soupape (9) présente un dispositif (14) pour régler la pression de transport maximale.

8. Installation selon la revendication 7,
**caractérisée en ce que** jusqu'à ce que la pression de transport maximale soit atteinte, l'admission de gaz pressurisé est reliée au raccord (11) de la ligne de mesure (12) et **en ce que**, lorsque la pression de transport maximale est dépassée, l'admission de gaz d'appoint est reliée au raccord (13) de l'évacuation de gaz d'appoint.

9. Installation selon une des revendications 1 à 8,
**caractérisée en ce que** les soupapes (8,9) présentent une membrane (16), qui est sollicitée d'une part par un ressort (15) et d'autre part par la pression prédominante de la conduite de transport (4) au niveau du raccord (7,11) du gaz de transport, respectivement au niveau du raccord de la ligne de mesure (12) et **en ce que** la membrane (16) est reliée à une tige de soupape (17) à double action.

10. Installation selon la revendication 9,
**caractérisée en ce que**
la force de ressort du ressort (15) peut être réglée.
